(19) Europäisches Patentamt
European Patent Office
Office européen des brevets

(11) EP 2 657 729 A1

(12) EUROPEAN PATENT APPLICATION
published in accordance with Art. 153(4) EPC

(43) Date of publication:
**30.10.2013 Bulletin 2013/44**

(21) Application number: **11850566.8**

(22) Date of filing: **22.12.2011**

(51) Int Cl.:
***G02B 1/11*** (2006.01) ***B32B 7/02*** (2006.01)
***B32B 27/30*** (2006.01) ***C08F 290/06*** (2006.01)

(86) International application number:
**PCT/JP2011/079797**

(87) International publication number:
**WO 2012/086749 (28.06.2012 Gazette 2012/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2010 JP 2010285650**

(71) Applicant: **Mitsubishi Rayon Co., Ltd.**
**Tokyo 100-8253 (JP)**

(72) Inventors:
- **OKAFUJI, Hiroshi**
**Otake-shi**
**Hiroshima 739-0693 (JP)**
- **KAWAI, Osamu**
**Otake-shi**
**Hiroshima 739-0693 (JP)**
- **SAWANO, Tetsuya**
**Yokohama-shi**
**Kanagawa 230-0053 (JP)**
- **YAMAZAWA, Hideto**
**Otake-shi**
**Hiroshima 739-0693 (JP)**

(74) Representative: **Ter Meer Steinmeister & Partner**
**Me/bk**
**Mauerkircherstrasse 45**
**81679 München (DE)**

# (54) TRANSFER FILM, METHOD FOR PRODUCING SAME, LAMINATE, AND METHOD FOR PRODUCING SAME

(57) Provided is a transfer film wherein: a low-refractive-index film having a refractive index (Nx) and a high-refractive-index film having a refractive index (Ny) are laminated in this order on one surface of a peeling film; the refractive indices satisfy Nx<Ny; and the high-refractive-index film contains an aminosilane. Also provided is a laminate wherein: a high-refractive-index film and a low-refractive-index film are laminated in this order on the surface of a substrate; and the high-refractive-index film contains an aminosilane. The transfer film is obtained by successively laminating and curing a composition for the low-refractive-index film and a composition for the high-refractive-index film on the peeling film. The laminate is produced by bonding the surface of the high-refractive-index film of the transfer film to the substrate, and then peeling away the peeling film.

EP 2 657 729 A1

**Description**

TECHNICAL FIELD

The present invention relates to a transfer film and a method for producing the same, and a laminate and a method for producing the same.

BACKGROUND ART

Transparent resins such as acrylic resins and polycarbonate resins are widely used as materials such as materials for industry and materials for construction. Particularly in recent years, in view of their transparency and shock resistance, they have been used as the front panels of displays such as CRT, liquid crystal televisions and plasma displays, and the like.

In recent years, various functions have been demanded in these front panels. An antireflection function can be exemplified as one of these demanded functions.

The antireflection function is a function for reducing the reflected light such as fluorescent light in a room projecting onto the front panel, and for displaying an image more vividly. As a method of imparting an antireflection function, for example, a method of forming an antireflective layer on the surface of the front panel can be exemplified.

In addition, it has been demanded to impart a fouling prevention (antifouling) function having water repellency and oil repellency to the surface of the antireflective layer. This is because, when a smear adheres to the surface of the antireflective layer, a color variation at the location stands out, and is connected with a decline in the visibility of the image display member.

In such as a situation, as a method for forming various functional layers on a substrate surface such as a plastic sheet with little flexibility, a method has been known of pasting, onto a substrate surface, a film excelling in scratch resistance, antifouling property, antireflection property, etc., having at least a hard coat layer (b) and a thin film coating layer (c) on one side of the plastic film, and having an adhesive layer (d) on another side of the plastic film. However, since plastic films serving as the substrate exist for forming a functional layer, there has been a rise in haze value, problems of film peeling during cross sectioning, problems of secondary workability being difficult, problems of bubbles occurring at the interface between the film and substrate during endurance testing (80°C), etc.

In order to solve these problems, a method has been disclosed of laminating a functional layer by a transfer method to impart a functional layer on the surface of a material, and a functional layer transfer film has been developed providing an antifouling layer and functional layer in order on one face of a substrate, and the mass fraction of fluorine in the antifouling layer distributes more at the above-mentioned substrate side than the above-mentioned functional layer (for example, refer to Patent Document 2).

Although a perfluoroalkyl antifouling agent for forming the antifouling layer is being used conventionally, when forming the antifouling layer with a wet method that coats this directly on the functional layer, there has been a problem in that the mass fraction of fluorine in the antifouling layer mostly distributes to the side of the above-mentioned functional layer, and it has not been possible to impart adequate antifouling function to the material surface obtained after transfer. In Patent Document 2, in order to solve this problem, a technique has been proposed of preparing a transfer film by forming the antifouling layer by a dry method such as the plasma CVD method. However, the method disclosed in Patent Document 2 has high manufacturing cost, and thus further improvement has been demanded.

In addition, the antireflective layer has low interface strength (interlayer adhesive force) due to the interface of each layer being clearly formed, and thus there has been a problem in that the antireflection film detaches from an abrasion test with steel wool or the like.

In order to solve the above problem, a technique has been known for improving the interface strength by adding aminosilane to each layer (for example, refer to Patent Document 3). In addition, a technique has been disclosed for adding aminosilane to a hard coat layer to improve the adherence with a substrate subjected to hydrophilic treatment in advance (for example, refer to Patent Document 4).

However, in a case of trying to impart an antireflection function to a substrate surface by a transfer method, it is necessary to create a transfer film produced by laminating a high- refractive- index layer on a low- refractive- index layer containing an antifouling component (water repellent and oil repellent components) ; however, since the antifouling component is added to the low- refractive- index layer, it has been extremely difficult to maintain the interface strength with the high- refractive- index layer high. In addition, in a case of containing polar solvents (high dielectric solvents) in a composition for high- refractive- index layer formation, there has been a problem in that the interface strength tends to decline.

In such a situation, the advent of a transfer film has been demanded that can provide a laminate having sufficient interface strength even if containing an antifouling component in the low-refractive-index layer, i.e. having favorable abrasion resistance, and excelling in antireflection performance and perspiration resistance.

Citation List

Patent Literature

Patent Literature 1: Japanese Unexamined Patent Application, Publication No. 2000-94584
Patent Literature 2: Japanese Unexamined Patent Application, Publication No. 2005-96322
Patent Literature 3: Japanese Unexamined Patent Application, Publication No. 2002-286907
Patent Literature 4: Japanese Unexamined Patent Application, Publication No. 2004-17410

DISCLOSURE OF THE INVENTION

Problems to be Solved by the Invention

The object of the present invention is to provide a transfer film that can provide a laminate excelling in antireflection performance and perspiration resistance, having sufficient interface strength even when containing an antifouling component in the low-refractive-index layer, i.e. having favorable abrasion resistance, and a method for producing the same, as well as a laminate excelling in antireflection performance and perspiration resistance, having favorable abrasion resistance, and a method for producing the same. It should be noted that, in the present disclosure, the refractive index is a measured value that was measured with a 594 nm wavelength laser.

Means for Solving the Problems

A first aspect of the present invention is a transfer film having a low-refractive-index film with a refractive index (Nx) and a high-refractive-index film with a refractive index (Ny) laminated in this order on one side of a peeling film, in which the refractive index is measured with a 594 nm wavelength laser, and satisfies the following formula (1), and the high-refractive-index film is formed from a high-refractive-index film composition containing aminosilane.

$$Nx<Ny \quad (1)$$

In addition, a second aspect of the present invention is a method for producing a transfer film in which a low-refractive-index film having a refractive index (Nx) and a high-refractive-index film having a refractive index (Ny) are laminated in this order on one side of a peeling film, in which the refractive index is measured with a 594 nm wavelength laser, and satisfies the following formula (1), the high-refractive-index film is formed from a high-refractive-index film composition containing aminosilane, and the method includes forming the low-refractive-index film on a surface of the peeling film, hydrophilic treating a surface of the low-refractive-index film, and coating a high-refractive-index film composition containing aminosilane to form the high-refractive-index film.

$$Nx<Ny \quad (1)$$

Furthermore, a third aspect of the present invention is a laminate having a high- refractive- index layer with a refractive index (Ny) and a low- refractive- index layer with a refractive index (Nx) laminated in this order on a surface of a substrate, in which the refractive index is measured with a 594 nm wavelength laser, and satisfies the following formula (1), and the high- refractive- index layer is formed from a high- refractive- index film composition containing aminosilane.

$$Nx<Ny \quad (1)$$

Moreover, a fourth aspect of the present invention is a method for producing a laminate in which a high-refractive- index film having a refractive index (Ny) and a low- refractive- index film having a refractive index (Nx) are laminated in this order on a surface of a substrate,

in which the refractive index is measured with a 594 nm wavelength laser, and satisfies the following formula (1),

$$Nx<Ny \quad (1);$$

the method including: a step of forming a transfer film laminated article by pasting the transfer film with the substrate onto a face of the high- refractive- index film via a bonding layer coating film; a step of forming a transfer film laminate with the bonding layer coating film as a bonding layer; and a step of peeling off a peeling film from the transfer film laminate to obtain a laminate.

Effects of the Invention

The transfer film according to the first aspect of the present invention can produce a laminate excelling in abrasion resistance, water repellency, oil repellency, antireflection performance, transparency and perspiration resistance on various molded article surfaces by way of the transfer method. In addition, the laminate according to the third aspect of the present invention can be appropriately employed in image display components used outdoors, and the front panels of portable telephones, portable information terminals, notebook computers, etc. for which abrasion resistance is required, and to which fingerprints, sebum, foundation, etc. tend to adhere.

DESCRIPTION OF EMBODIMENTS

Transfer Film

In a transfer film according to a first embodiment, a low-refractive-index film having a refractive index (Nx) and a high-refractive-index film having a refractive index (Ny) are sequentially formed on the surface of a peeling film. These refractive indices satisfy the following formula (1). It is explained more specifically below.

$$Nx < Ny \quad (1)$$

Peeling Film

The peeling film used in the present invention is a film that peels off and is removed after laminating the transfer film on the surface of a substrate described later. Then, it is preferable to use an active energy ray transparent film for the reasons described later. In addition, as the peeling film in the present invention, a laminate film having a peeling layer can be used.

As the peeling film, a film having a critical surface tension of the surface of the peeling film or peeling layer that is at least 40 mN/m, particularly an active energy ray transmissive film, is preferable in the aspect of obtaining film forming property without defects such as cissing (phenomenon of the base being exposed at a part of the coating) upon applying a composition for the low-refractive-index film (LRM composition) for forming the low-refractive-index film on the surface of the peeling film so as to form an LRM composition coating.

It should be noted that the critical surface tension can be calculated by the Zisman plot method in the present invention. In other words, the contact angle (θ) between a standard solution and the film surface is measured by dropping various standard solutions having different surface tensions onto the surface of the film. The cosθ value calculated from the obtained contact angle (θ) and the value of the surface tension are plotted on a graph with XY coordinates, and the value of the surface tension at the intersection between a line connecting the obtained plot (Zisman plot) and the line expressed by cosθ=1 is the critical surface tension.

As the peeling film, aromatic polyester films such as a polyethylene terephthalate (PET) film, polyethylene naphthalate (PEN) film, polybutylene terephthalate (PBT) film, polybutylene naphthalate (PBN) film, polytrimethylene terephthalate (PTT) film; synthetic resin films such as polycarbonate film, polyamide film and polyamide-imide film; composite film-like substances or composite sheet-like substances of these can be exemplified.

Among these, aromatic polyester films such as PET film, PEN film, PBT film, PBN film and PTT film are preferable, and particularly preferable are PET film and PEN film. The reason is that, even if the content of a monomer (A) described later in the LRM composition is small, sufficient wettability will be possessed to allow for coating on these films, whereby it is possible to form a favorable LRM composition coating. Furthermore, when using as a transfer film to produce a laminate, a laminate layer will be configured, and the water contact angle of the surface thereof, or triolein

contact angle can be raised. As a result thereof, a component improving the abrasion property can be abundantly added to the LRM composition, and the abrasion property of the laminate surface can be made favorable.

In addition, as the peeling film, although it may be transparent or non-transparent, it is preferable to be transparent due to being able to perform ultraviolet irradiation also from the peeling film side.

Although the thickness of the peeling film is not particularly limited, it is preferably at least 4 μm due to being able to easily produce a transfer film without wrinkles, cracks, etc., at least 12 μm being more preferable, and at least 30 μm being further preferable. In addition, the thickness of the peeling film is preferably no more than 500 μm from the viewpoints of cost and ultraviolet transmittance, no more than 150 μm being more preferable, and no more than 120 μm being further preferable.

In the present invention, in order to make the peeling property between the peeling film and the low-refractive-index film favorable, a peeling layer may be provided at the surface of the peeling film. As the peeling layer forming material in the case of forming a peeling layer on the surface of the peeling film, a polymer, wax or the like for forming a known peeling layer can be selected for use as appropriate.

As the formation method of the peeling layer, for example, a method can be exemplified that forms by coating a paint in which a melamine- based, urea- based, urea- melamine- based, benzoguanamine- based, etc. resin and surfactant are dissolved in an organic solvent or water, on the surface of the peeling film by a known printing method such as the photogravure method, screen printing method and offset printing method, and then drying or curing.

The thickness of the peeling film is appropriately on the order of 0.1 to 3 μm, for example. Configuring the peeling layer to have the appropriate thickness is favorable since it is possible to make the peeling property between the peeling film and the low-refractive-index film favorable. In addition, it is preferable if the peeling layer is not too thick because the low-refractive-index film does not easily detach from the peeling film prior to transfer.

Low-Refractive-Index Film

The low-refractive-index film of the present invention is a film formed on one side of the above-mentioned peeling film, and is a film that constitutes the outermost surface of a laminate.

The LRM composition used in the formation of the low-refractive-index film is a curable composition in which the refractive index (Nx) of this composition is relatively low, and usually is no more than 1.5, and for example, is selected from a thermosetting composition for low-refractive-index films and an active energy ray curable composition for low-refractive-index films.

In the present invention, in order to make the refractive index (Nx) of the low-refractive-index film relatively low, normally no more than 1.5, it is preferable for the low-refractive-index film to contain a polymer having the monomer (A) unit containing a perfluoropolyether group and nitrogen atom (hereinafter referred to as "monomer (A) unit").

As the monomer (A), for example, a monomer (A-1) represented by the following structural formula (1), and a monomer (A-2) (hereinafter referred to as "monomer (A-2)") obtained by reacting a perfluoropolyether (F) having active hydrogen at at least one molecular end with a compound (E) that at the same time has an isocyanate group and one or two (meth)acryloyloxy groups can be exemplified.

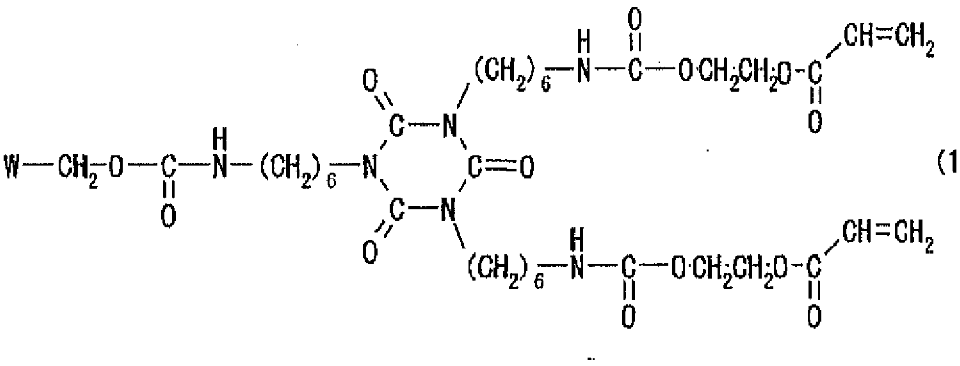

(1)

(In the formula, W represents a perfluoropolyether group.)

Among these, monomer (A-1) is preferable as the monomer (A) in the point of the water repellency and oil repellency of the laminate.

As the production method of monomer (A), for example, a method of reacting triisocyanate (C) arrived at by trimerizing diisocyanate (hereinafter referred to as "triisocyanate (C)") and an active hydrogen-containing compound (D) can be exemplified.

As the diisocyanate used in order to obtain the triisocyanate (C), for example, diisocyanates in which the isocyanate group is bound to an aliphatic skeleton such as hexamethylene diisocyanate, isophorone diisocyanate, xylylene diisocyanate, hydrogenated xylylene diisocyanate, dicyclohexylmethane diisocyanate; and diisocyanates in which the isocyanate group is bound to an aromatic skeleton such as tolylene diisocyanate, diphenylmethane diisocyanate and naphthalene diisocyanate can be exemplified.

As the active hydrogen-containing compound (D), for example, a compound containing an active hydrogen such as a hydroxyl group can be exemplified.

As a specific example of the active hydrogen-containing compound (D), a perfluoropolyether (D-1) having one active hydrogen (hereinafter referred to as "polyether (D-1)"), and a monomer (D-2) having an active hydrogen and a carbon-carbon double bond (hereinafter referred to as "monomer (D-2)") can be exemplified.

As the polyether (D-1), for example, a compound having a perfluoropolyether group and a hydroxyl group at one molecular end can be exemplified.

As a specific example of the polyether (D-1), a compound represented by the following structural formula (2) can be exemplified.

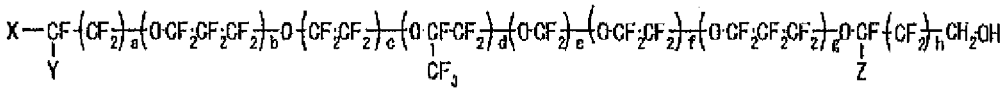

(2)

(In the formula, X is a fluorine atom, Y and Z are each a fluorine atom or trifluoromethyl group, a is an integer of 1 to 16, c is an integer of 1 to 5, b, d, e, f and g are integers of 0 to 200, and h is an integer of 0 to 16.)

In formula (2), so long as the numerical values of a to h are not too large, the molecular weight will not be too large, and the solubility will tend to be favorable. On the other hand, so long as the numerical values of a to h are not too small, the water repellency and oil repellency will tend to be favorable.

As the monomer (D- 2), for example, 2- hydroxyethyl (meth) acrylate, 2- hydroxypropyl (meth) acrylate and 2-hydroxybutyl (meth) acrylate can be exemplified.

It should be noted that "(meth)acrylate" in the present specification indicates "acrylate" or "methacrylate". Hereinafter, the same also applies for "(meth)acryl" and "(meth)acryloyl".

As a specific example for the production of the monomer (A), the polyether (D-1) is reacted with one isocyanate group of the triisocyanate (C), and the monomer (D-2) is reacted with the remaining two isocyanate groups. In the reaction, the polyether (D-1) and monomer (D-2) may be reacted simultaneously with the triisocyanate (C), or may be reacted sequentially.

As a compound (E) simultaneously having an isocyanate group, and one or two (meth) acryloyloxy groups, which is one of the raw materials used in order to obtain the monomer (A- 2) (hereinafter referred to as "compound (E) "), for example, 1, 1- bis (acryloyloxymethyl) ethyl isocyanate, 2- acryloyloxyethyl isocyanate and 2- methacryloyloxyethyl isocyanate (these are all being marketed by the trade names of KarenzBEI, KarenzAOI and KarenzMOI, respectively, by Showa Denko Company) can be exemplified.

As the perfluoropolyether (F) having active hydrogen at at least one molecular end, which is one of the raw materials used in order to obtained the monomer (A-2) (hereinafter referred to as "compound (F)"), for example, FLUOROLINK D10H, FLUOROLINK D and FLUOROLINK D4000 (all trade names) made by Solvay Solexis can be exemplified.

In addition, as the monomer (A-2), for example, a compound independently having, in one molecule, one perfluoropolyether group and one or two vinyl groups or (meth)acryloyloxy groups, preferably two vinyl groups or (meth) acryloyloxy groups, in which the isocyanate group of the compound (E) and a hydroxyl group of the compound (F) are bonded, can be exemplified. Herein, "independently" indicates the perfluoropolyether group and vinyl group or (meth) acryloyloxy group not being directly bonded.

The content of the monomer (A) contained in the LRM composition is preferably at least 10 parts by mass, and more preferably at least 12 parts by mass, relative to 100 parts by mass solid content of the LRM composition. In addition, the content of the monomer (A) is preferably no more than 50 parts by mass, and more preferably no more than 30 parts by mass, relative to 100 parts by mass solid content of the LRM composition. By setting the content of the monomer (A) to within this range, the water repellency, oil repellency and hardness of the surface of the laminate tend to become favorable. Herein, "solid content" refers to components excluding diluting solvent.

As the low-refractive-index film of the present invention, one is preferable that establishes a water contact angle of a face of the low-refractive-index film of at least 90 degrees, and preferably at least 95 degrees, and the triolein contact angle ($\alpha$) is at least 55 degrees, and preferably at least 60 degrees, in the aspect of color variation prominent in the reflected colors and a decline in the visibility of a image display component not occurring easily, when a smear adheres to the surface of the low-refractive-index film formed on the surface of the laminate.

In order to obtain a low-refractive-index film having a surface for which the water contact angle is at least 90 degrees, and for which the triolein contact angle ($\alpha$) achieves at least 55 degrees, a composition containing inorganic particles (B) as well as the monomer (A) is preferable as the LRM composition.

As the content of the inorganic particles (B) in the LRM composition, it is preferably at least 25 parts by mass and no more than 90 parts by mass relative to 100 parts by mass solid content of the LRM composition.

As the inorganic particles (B), low-refractive-index particles such as of colloidal silica, porous silica, hollow silica, magnesium fluoride and cryolite can be exemplified. Among these, as the inorganic particles (B), it is preferable to use low-refractive-index particles with a refractive index of 1.5 or less.

In addition, as described later, as the inorganic particles (B), silica particles are preferable in the aspect of hydrolysis treatment of the surface being easily carried out, and hollow silica is more preferable in the aspect of the refractive index being low and tending to cause the reflectance to decline, and further from the aspect of the water repellency and oil repellency of the surface of the laminate becoming favorable. The refractive index of hollow silica is low at 1.20 to 1.40 compared to the normal refractive index of silica of 1.45 to 1.47. Therefore, in order to lower the refractive index (Nx) of the low-refractive-index film in the present invention, hollow silica is more preferable.

As the average particle size of the inorganic particles (B), at least 5 nm is preferable in the aspect of the strength of the low-refractive-index film being maintained, and is more preferably at least 10 nm. In addition, the average particle size thereof is preferably no more than 100 nm in the aspect of the transparency of the laminate becoming favorable, and is more preferably no more than 80 nm.

As the inorganic particles (B), those arrived at by separately treating the particle surface with a surface treatment agent such as a hydrolyzable silane compound is preferable in the aspect of the water repellency and oil repellency of the surface of the laminate becoming favorable, and the aspect of being able to improve the strength of the low-refractive-index film. Separate treatment refers to reacting the inorganic particles (B) only with the surface treatment agent such as a hydrolyzable silane compound, and refers to treating the surface of the inorganic particles (B) in a state not containing compounds other than catalysts that contribute to the hydrolysis and condensation reactions such as acids and bases.

As the mixing ratio of inorganic particles (B) and hydrolyzable silane compound upon reacting the hydrolyzable silane compound with the surface of the inorganic particles (B), it is preferable for the inorganic particles (B) to be at least 30% by mass, preferably at least 40% by mass, and no more than 80% by mass, preferably no more than 70% by mass, relative to the total of inorganic particles (B) and hydrolyzable silane compound in the aspect of water repellency, oil repellency, abrasion resistance and perspiration resistance of the surface of the laminate.

As the hydrolyzable silane compound, for example, 3- (meth) acryloyloxypropyl trimethoxysilane, 3- (meth) acryloyloxypropylmethyl dimethoxysilane, 3- (meth) acryloyloxypropylmethyl diethoxysilane, 3- (meth) acryloyloxypropyl triethoxysilane, p- styryl trimethoxysilane, 2- (3, 4- epoxycyclohexyl) ethyl trimethoxysilane, 3- glycidoxypropyl trimethoxysilane, 3- glycidoxypropylmethyl diethoxysilane, and the like can be exemplified.

As the surface treatment agent in the present invention, compounds such as anionic surfactants, non-ionic surfactants and cationic surfactants can be jointly used with the hydrolyzable silane compound.

In the case of the LRM composition containing the monomer (A), since the monomer (A) has an unsaturated bond, as the hydrolyzable silane compound, one having an unsaturated bond is preferable in the aspect of the water repellency and oil repellency of the surface of the laminate becoming favorable.

In the present invention, it is possible to contain in the LRM composition a compound having at least two (meth) acryloyl groups in the molecule (hereinafter referred to as "cross-linking component (A)"), in the aspect of abrasion resistance of the surface of the laminate.

As the content of the cross-linking component (A), it is preferably 0 to 30 parts by mass relative to 100 parts by mass solid content of the LRM composition.

As the cross-linking component (A), for example, esterified products obtained from one mole of polyalcohol and at least two moles of (meth)acrylic acid or derivatives thereof, and esterified products obtained from polyvalent carboxylic acid or anhydride thereof, polyalcohol, and (meth)acrylic acid or derivative thereof can be exemplified.

As the esterified product obtained from one mole of polyalcohol and at least two moles of (meth) acrylic acid or derivative thereof, polyethylene glycol di (meth) acrylates such as diethylene glycol di (meth) acrylate, triethylene glycol di (meth) acrylate and tetraethylene glycol di (meth) acrylate; alkylenediol di (meth) acrylates such as 1, 4-butanediol di (meth) acrylate, 1, 6- hexanediol di (meth) acrylate, 1, 9- nonanediol di (meth) acrylate; and trifunctional or higher polyol poly (meth) acrylates such as trimethylolpropane tri (meth) acrylate, trimethylolethane tri (meth) acrylate, pentaglycerin tri (meth) acrylate, pentaerythritol tri (meth) acrylate, pentaerythritol tetra (meth) acrylate, glycerin tri (meth) acrylate, dipentaerythritol tri (meth) acrylate, dipentaerythritol tetra (meth) acrylate, dipentaerythritol penta (meth) acrylate, dipentaerythritol hexa (meth) acrylate, tripentaerythritol tetra (meth) acrylate, tripentaerythritol penta (meth) acrylate, tripentaerythritol hexa (meth) acrylate and tripentaerythritol hepta (meth) acrylate.

For the esterified product obtained from a polycarboxylic acid or anhydride thereof, polyalcohol and (meth) acrylic acid or derivative thereof, as combinations of a polycarboxylic acid or anhydride thereof, a polyalcohol and (meth) acrylic acid (polycarboxylic acid or anhydride thereof/polyalcohol/(meth)acrylic acid), for example, malonic acid/trimethylolethane/(meth)acrylic acid, malonic acid/trimethylolpropane/(meth)acrylic acid, malonic acid/glycerin/(meth)acrylic acid, malonic acid/pentaerythritol/(meth)acrylic acid, succinic acid/trimethylolethane/(meth)acrylic acid, succinic acid/trimethylolpropane/(meth)acrylic acid, succinic acid/glycerin/(meth)acrylic acid, succinic acid/pentaerythritol/(meth)acrylic acid, adipic acid/trimethylolethane/(meth)acrylic acid, adipic acid/trimethylolpropane/(meth)acrylic acid, adipic acid/glycerin/(meth)acrylic acid, adipic acid/pentaerythritol/(meth)acrylic acid, glutaric acid/trimethylolethane/(meth)acrylic acid, glutaric acid/trimethylolpropane/(meth)acrylic acid, glutaric acid/glycerin/(meth)acrylic acid, glutaric acid/pentaerythritol/(meth)acrylic acid, sebacic acid/trimethylolethane/(meth)acrylic acid, sebacic acid/trimethylolpropane/(meth) acrylic acid, sebacic acid/glycerin/(meth)acrylic acid, sebacic acid/pentaerythritol/(meth)acrylic acid, fumaric acid/trimethylolethane/(meth)acrylic acid, fumaric acid/trimethylolpropane/(meth)acrylic acid, fumaric acid/glycerin/(meth)acrylic acid, fumaric acid/ pentaerythritol/(meth)acrylic acid, itaconic acid/trimethylolethane/(meth)acrylic acid, itaconic acid/trimethylolpropane/(meth)acrylic acid, itaconic acid/glycerin/(meth)acrylic acid, itaconic acid/pentaerythritol/(meth)acrylic acid, maleic anhydride/trimethylolethane/(meth)acrylic acid, maleic anhydride/trimethylolpropane/(meth)acrylic acid, maleic anhydride/glycerin/(meth)acrylic acid and maleic anhydride/pentaerythritol/(meth)acrylic acid can be exemplified.

As other examples of compounds having at least two (meth) acrylol groups in a molecule, urethane (meth) acrylates obtained by reacting at least 3 moles of acrylic monomer having active hydrogen such as 2- hydroxyethyl (meth) acrylate, 2- hydroxypropyl (meth) acrylate, 2- hydroxy- 3- methoxypropyl (meth) acrylate, N- methylol (meth) acrylamide, N- hydroxy (meth) acrylamide, 15, 3- propanetriol- 1, 3- di (meth) acrylate and 3- acryloyloxy- 2- hydroxypropyl (meth) acrylate, relative to 1 mole of polyisocyanate obtained by trimerizing diisocyanate such as trimethylolproprane toluylene diisocyanate, hexamethylene diisocyanate, tolylene diisocyanate, diphenylmethane diisocyanate, xylene diisocyanate, 4, 4'- methylene bis (cyclohexyl isocyanate), isophorone diisocyanate and trimethylhexamethylene diisocyanate; poly[(meth) acryloyloxyethyl] isocyanurate such as a di (meth) acrylate or tri (meth) acrylate of tris (2- hydroxyethyl) isocyanuric acid; epoxy poly (meth) acrylate; and urethane poly (meth) acrylate can be exemplified.

The cross-linking component (A) can be used individually, or by combining two or more types.

In the case of the LRM composition being an active energy ray curable composition for low-refractive-index films, it is possible to blend a photoinitiator into the LRM composition.

As the photoinitiator, for example, carbonyl compounds such as benzoin, benzoin methyl ether, benzoin ethyl ether, benzoin isopropyl ether, benzoin isobutyl ether, acetoin, butyroin, toluoin, benzylic, benzophenone, p- methoxybenzophenone, 2, 2- diethoxyacetophenone, $\alpha$, $\alpha$- dimethoxy- $\alpha$- phenylacetophenone, methyl phenylglyoxylate, ethyl phenylglyoxylate, 4, 4'- bis (dimethylamino) benzophenone, 1- hydroxycyclohexyl phenyl ketone and 2- hydroxy- 2-methyl- 1- phenylpropan- 1- one; sulfur compounds such as tetramethylthiuram monosulfide and tetramethylthiuram disulfide; and phosphorus compounds such as 2, 4, 6- trimethylbenzoyl diphenylphosphine oxide, bis (2, 4, 6- trimethylbenzoyl) phenylphosphine oxide and benzoyldiethoxyphosphine oxide can be exemplified.

As the added amount of photoinitiator, it is preferably at least 0.1 parts by mass, more preferably at least 0.5 parts by mass, and further preferably at least 1 part by mass relative to 100 parts by mass solid content of the LRM composition, in the aspect of the curing property of the LRM composition by ultraviolet irradiation. In addition, as the added amount of photoinitiator, it is preferably no more than 10 parts by mass, and more preferably no more than 7 parts by mass in the aspect of making the color quality of the low-refractive-index film favorable and making the antifouling property favorable.

In a case of the LRM composition being a thermosetting composition, it is possible to blend a hardener into the LRM composition.

As the hardener, for example, azo- based polymerization initiators such as 2, 2'- azobis (4- methoxy- 2, 4-dimethyl valeronitrile), 2, 2'- azobisisobutyronitrile and 2, 2'- azobis (2, 4- dimethyl valeronitrile) ; and organic peroxide-based polymerization initiators such as lauroyl peroxide, diisopropyl peroxydicarbonate, benzoyl peroxide, bis (4- t-butylcyclohexyl) peroxycarbonate, t- butyl peroxyneodecanoate and t- hexyl peroxypivalate. These can be used individually or by combining two or more types.

In the present invention, it is possible to blend into the LRM composition additives such as a slip improver, a leveling agent, an ultraviolet absorber and a light stabilizer such as HALS.

As the blended amount of additive, it is preferably no more than 10 parts by mass relative to 100 parts by mass solid content of the LRM composition, in the aspect of transparency of the low-refractive-index film.

In the present invention, in order to adjust the solid content concentration of the LRM composition, it is possible to add a diluting solvent into the LRM composition. As the diluting solvent, for example, methyl ethyl ketone, methyl isobutyl ketone, isopropanol, ethanol, 1- methoxy- 2- propanol and 2, 2, 3, 3- tetrafluoro- 1- propanol can be exemplified.

As the solid content concentration of the LRM composition, 0.1 to 20% by mass is preferable. By setting the solid content concentration of the LRM composition to this range, the storage stability of the LRM composition can be made favorable, and control to a desired film thickness is facilitated.

As the film thickness of the low-refractive-index film, at least 10 nm is preferable, and at least 60 nm is more preferable from the viewpoint of the water repellency, oil repellency, abrasion resistance and antireflection performance of the surface of the laminate. In addition, as the film thickness of the low-refractive-index film, no more than 300 is

preferable, and no more than 110 nm is more preferable, from the viewpoint of optical properties.

The refractive index (Nx) of the low-refractive-index film may be a refractive index lower than the film contacting below the low-refractive-index film in the laminate, and is not particularly established; however, it is no more than 1.5, preferably no more than 1.45, and more preferably no more than 1.4, from the viewpoint of antireflection performance.

In addition, the difference between the refractive index (Nx) of the low-refractive-index film and the refractive index of the film contacting below the low-refractive-index film is preferable larger from the viewpoint of antireflection performance.

High-Refractive-Index Film

In the present invention, in the case of being a transfer film, the high-refractive-index film is a film formed on the surface of the low-refractive-index film, and has a refractive index that is higher than the refractive index of the low-refractive-index film.

As the composition for high-refractive-index films (hereinafter referred to as "HRM composition") for forming the high-refractive-index film, for example, at least one type of curable composition selected from a thermosetting composition and an active energy ray curable composition for high-refractive-index films can be exemplified.

It is possible to contain a compound having at least two (meth)acryloyloxy groups (hereinafter referred to as "cross-linking component (B)") in the HRM composition. As the cross-linking component (B), for example, one similar to the cross-linking component (A) can be exemplified.

In the present invention, the HRM composition contains aminosilane. By aminosilane being contained in the HRM composition, it is possible to obtain a laminate excelling in abrasion resistance.

As the aminosilane, for example, N- 2- (aminoethyl)- 3- aminopropylmethyldimethoxysilane, N- 2- (aminoethyl)- 3- aminopropyltrimethoxysilane and N- 2- (aminoethyl)- 3- aminopropyltriethoxysilane can be exemplified.

As the added amount of aminosilane in the HRM composition, at least 1 part by mass relative to 100 parts by weight solid content of the HRM composition is preferable in order to make the abrasion resistance of the laminate favorable. In addition, as the added amount of aminosilane in the HRM composition, no more than 30 parts by mass relative to 100 parts by mass solid content of the HRM composition is preferable in order to make the optical properties of the laminate favorable.

In the present invention, metal oxide particles can be added into the HRM composition with the object of an improvement in the strength of the high-refractive-index film and raising the refractive index. As the metal oxide particles, for example, those having a refractive index on the order of 1.55 to 2.0 can be exemplified.

As specific examples of the metal oxide particles, zirconium oxide, tin oxide and antimony doped tin oxide (ATO), indium oxide and tin doped indium oxide (ITO), zinc oxide and aluminum doped zinc oxide, zinc antimonite as well as antimony pentoxide can be exemplified. Among these, zirconium oxide is preferable from the viewpoint of high refractive index and favorable transparency.

As the average particle size of the metal oxide particles, at least 3 nm is preferable, and at least 5 nm is more preferable, from the aspect of the strength of the high-refractive-index film being maintained. In addition, no more than 100 nm is preferable, and no more than 80 nm is more preferable, from the aspect of the transparency of the laminate becoming favorable.

As the added amount of the metal oxide particles in the HRM composition, at least 20 parts by mass relative to 100 parts by mass solid content of the HRM composition is preferable in order to make the abrasion resistance and antireflection performance of the laminate favorable. In addition, as the added amount of metal oxide particles in the HRM composition, no more than 80 parts by mass relative to 100 parts by mass solid content of the HRM composition is preferable in order to make the optical properties of the laminate favorable.

In the present invention, the surface of the metal oxide particles can be treated with a similar treatment agent as the hydrolyzable silane compound that can be used in the treatment of the surface of the above-mentioned inorganic particles (B).

As the mixing ratio of the metal oxide particles and hydrolyzable silane compound upon reacting the hydrolyzable silane compound at the surface of the metal oxide particles, it is preferable for the metal oxide particles to be at least 20% by mass and no more than 80% by mass relative to the total of the metal oxide particles and hydrolysable silane compound from the aspect of the abrasion resistance and antireflection performance of the surface of the laminate.

In the present invention, in the case of using an active energy ray curable composition for high-refractive-index films as the HRM composition, it is possible to blend a similar photoinitiator as the photoinitiator that can be blended into the LRM composition. The photoinitiator can be used independently or by combining two or more types.

In the present invention, it is possible to blend into the HRM composition various additives such as a slip improver, a leveling agent, an ultraviolet absorber and a light stabilizer such as HALS. As the blending amount of additives, no more than 10 parts by mass relative to 100 parts by mass solid content of the HRM composition is preferable from the aspect of the transparency of the high-refractive-index film.

In the present invention, it is possible to add a diluting solvent into the HRM composition in order to adjust the solid content concentration of the HRM composition.

A diluting solvent may be used independently, or a plurality may be combined. A diluting solvent having a dielectric constant at 25°C of no more than 10 is preferable because the storage stability of the HRM composition will be favorable. By setting the dielectric constant to no more than 10, even if using an HRM composition that had been left for a long time (e.g., 24 hours or more) at room temperature, it will be possible to make the abrasion resistance of the laminate favorable when obtaining a laminate using the transfer film described later.

In order to set the dielectric constant of the diluting solvent to no more than 10, the dielectric constant of no more than 10 may be established with an independent diluting solvent, or the dielectric constant of no more than 10 may be established by mixing a plurality of diluting solvents.

As the diluting solvent having a dielectric constant no more than 10 independently, for example, toluene (2.38), xylene (2.41), butyl acetate (5.02) and chloroform (4.9) can be exemplified. It should be noted that the number values in the parenthesis represent the dielectric constant. In addition, as an example of establishing a dielectric constant as a mixed diluting solvent to no more than 10 by combining a diluting solvent having a dielectric constant no more than 10 and a diluting solvent of at least 10, one produced by adding at least 45% by mass toluene to the total amount of toluene and isopropanol can be exemplified.

As the solid content concentration of the HRM composition, 5 to 50% by mass is preferable. By setting the solid content concentration of the HRM composition to this range, it is possible to make the storage stability of the HRM composition favorable, control to a desired film thickness is facilitated.

As the film thickness of the high-refractive-index film, at least 0.1 μm to no more than 10 μm is preferable from the viewpoint of abrasion resistance and optical performance of the laminate.

Although it is acceptable so long as the refractive index (Ny) of the high-refractive-index film is a refractive index higher than the low-refractive-index film, at least 1.55 is preferable, at least 1.6 is more preferable, and at least 1.7 is further preferable from the viewpoint of antireflection performance.

In the present invention, an antistatic function may be imparted to the high-refractive-index film by adding an antistatic component to the HRM composition. As the surface resistance value on the low-refractive-index film side of the present laminate in the case of imparting an antistatic function, no more than $10^{10}$ Ω/□ is preferable, and no more than $10^{8}$ Ω/□ is more preferable.

Transfer Film

The transfer film is a transfer film in which a low-refractive-index film and high-refractive-index film are laminated in this order on at least one side of the peeling film. The matter of a low-refractive-index film and high-refractive-index film being laminated in this order on at least one side of the peeling film is the matter of the low-refractive-index film being laminated on a surface of the peeling film, and then a high-refractive-index film being laminated on the low-refractive-index film.

In the transfer film, it is possible to laminate a bonding layer on the face of the high-refractive-index film of the transfer film as necessary. In addition, in the transfer film, it is possible to laminate an intermediate-refractive-index film on a face of the high-refractive-index film of the transfer film as necessary. In this case, the intermediate-refractive-index film has a refractive index between the refractive index (Nx) of the low-refractive-index film and the refractive index (Ny) of the high-refractive-index film.

In the present invention, it is possible to laminate a known protective film as necessary on a face of the transfer film that is not the peeling film.

Method of Producing Transfer Film

In the present invention, the following method can be exemplified as the method of producing the transfer film, for example.

First, the low- refractive- index film is formed on the surface of the peeling film. Next, a step is undergone in which the surface of the obtained low- refractive- index film is hydrophilic treated. Furthermore, in a step of forming a high- refractive- index film on the surface of the hydrophilic treated low- refractive- index film, a high- refractive- index film is formed using the HRM composition containing aminosilane to obtain the transfer film.

The following method can be exemplified as the formation method of a coating film of the LRM composition for forming the low-refractive-index film on the surface of the peeling film.

First, in a low- refractive- index film formation step, the LRM composition is coated, and in the case of containing a diluting solvent, the diluting solvent is removed by drying, thereby forming an LRM composition coating film.

As a method of coating the LRM composition on the surface of the peeling film, for example, a flow expanding method, gravure coating method, reverse gravure coating method, vacuum slot die coating method, roller coating method,

bar coating method, spray coating method, air knife coating method, spin coating method, flow coating method, curtain coating method, film cover method, and dipping method can be exemplified.

The LRM composition coating film obtained, for example, is cured by a curing method such as a thermosetting method or an active energy ray curing method, whereby a low-refractive-index film is obtained.

In the case of irradiating ultraviolet rays as the active energy rays in the case of obtaining the low-refractive-index film by an active energy ray curing method, a high pressure mercury lamp, metal-halide lamp and fluorescent ultraviolet lamp can be exemplified as the light source. Ultraviolet irradiating under an inert gas atmosphere such as nitrogen or argon is preferable because the surface curing property improves and the manufacturing process passage improves. As the oxygen concentration in the atmosphere at the surface of the coating film of the LRM composition upon ultraviolet ray curing, no more than 1,000 ppm is preferable, no more than 500 ppm is more preferable, and no more than 300 ppm is further preferable.

In addition, as the curing conditions according to active energy rays for curing the LRM composition, the curing conditions of a peak illumination of 100 to 1,200 mW/cm$^2$ and accumulated light amount of 100 to 1,200 mJ/cm$^2$ are preferable in the aspect of balance between antireflection performance and abrasion resistance of the laminate.

As the method of obtaining the low-refractive-index film by curing the LRM composition, for example, a method of curing the LRM composition prior to forming the high-refractive-index film, a method of coating the HRM composition on the coating film of the LRM composition produced by partially curing the LRM composition (hereinafter referred to as "LRM composition partially cured coating film"), and the jointly curing the LRM composition partially cured coating film simultaneously with curing the HRM composition, and a method of jointly curing the LRM composition partially cured coating film simultaneously with obtaining a bonding layer upon laminating the transfer film through the bonding layer on a substrate described later can be exemplified.

As a method of hydrophilic treating the surface of the low-refractive-index film, ultraviolet irradiation, electron beam irradiation, heat treatment, corona treatment and plasma treatment can be exemplified. By hydrophilic treating the surface of the low-refractive-index film, it is possible to raise the interface strength between the low-refractive-index film and the high-refractive-index film, and make the abrasion resistance of the laminate favorable. In addition, the hydrophilic treatment of the surface of the low-refractive-index film is preferably corona treatment or plasma treatment from the viewpoint of the abrasion resistance of the laminate.

In the corona treatment, it is possible to treat using usual corona treatment equipment. One example of corona treatment is illustrated below.

In other words, using corona treatment equipment consisting of an electrically insulated belt and an electrode disposed to approach above the belt, corona treatment is conducted on the surface of the low-refractive-index film by having high energy act on the electrode to cause a corona discharge, and passing through the peeling film on which the low-refractive-index film with the low-refractive-index film side as the top side disposed above the belt, below the electrode.

The irradiation energy on the peeling film on which the low-refractive-index film is formed at this time is preferably at least 10 W·min/m and no more than 200 W·min/m. It is possible to make the adhesiveness between the low-refractive-index film and the high-refractive-index film favorable by setting the irradiation energy to at least 10 W·min/m. In addition, it is possible to make the appearance of the low-refractive-index film favorable by setting the irradiation energy to no more than 200 W·min/m. Furthermore, in order to cause a corona discharge to be stably generated, the clearance between the peeling film on which the low-refractive-index film is formed and the electrode is preferably no more than 5 mm.

In the plasma treatment, although it is possible to treat using usual plasma treatment equipment, high pressure plasma treatment equipment is preferable due to being simple in operation.

As the plasma treatment method, for example, although the remote method and direct method can be exemplified, the direct method is preferable in the aspect of uniform treatment being obtained.

One example of the configuration of high pressure plasma treatment equipment is illustrated below.

Specifically, a pair of counter electrodes consisting of an upper electrode and a lower electrode are provided inside of a treatment chamber, and the opposing face of at least one electrode is covered by a dielectric. The part at which the plasma generates is between the dielectric and the electrode in the case of a dielectric being coated on only either one of the counter electrodes, and is between dielectrics in the case of dielectrics being coated on both of the counter electrodes. The peeling film on which the low- refractive- index film is formed is disposed between the counter electrodes of such plasma treatment equipment, and the plasma is generated between the counter electrodes by applying high- frequency electricity at a power source, thereby plasma treating the surface of the low- refractive- index film.

The distance between opposing faces of the counter electrodes (shortest distance) is decided by taking account of the thickness of the film on which the treated low-refractive-index film is formed, thickness of the coated dielectric, magnitude of applied voltage, etc.; however, in either the case of the dielectric being covered on only one of the counter electrodes and the case of the dielectric being covered on both, it is preferably no more than 50 mm. When the minimum distance is no more than 50 mm, it is possible to generate a uniform discharge plasma.

The frequency of the high-frequency electricity applied between the counter electrodes is preferably at least 1 kHz. In addition, the frequency of the high-frequency electricity applied between the counter electrodes is preferably no

more than 10 MHz, and more preferably no more than 500 kHz.

The electric surface density is preferably at least 2.0 W/$cm^2$, and preferably no more than 30.0 W/$cm^2$. When the frequency is at least 1 kHz, an effect of an improvement in the interface strength tends to be obtained. In addition, when the frequency is no more than 10 MHz, deformation and degradation during treatment of the peeling film on which the low-refractive-index film is formed tends to be suppressed. In addition, when the electric surface density is no more than 30.0 W/$cm^2$, deformation of the peeling film on which the low-refractive-index film is formed due to plasma irradiation heat can be suppressed. It should be noted that electric surface density is a value arrived at by dividing the electricity applied between the pair of counter electrodes by the surface area of one electrode coming into contact with the plasma.

A similar method as the method of applying the LRM composition to the surface of the peeling film can be exemplified as the method of forming a coating film of the HRM composition by coating the HRM composition on the surface of the low-refractive-index film after hydrophilic treatment.

The coating film of the HRM composition, for example, is cured by at least one curing method selected from thermosetting and active energy ray curing method, whereby a high-refractive-index film can be obtained.

As the active energy ray curing conditions for curing the HRM composition, for example, curing conditions of a peak illumination of 200 to 1,000 mW/$cm^2$ and accumulated light amount of 400 to 1,200 mJ/$cm^2$ under the presence of air can be exemplified. At the above curing conditions, it tends to be possible to make the balance of the adhesion, abrasion resistance and appearance after humidity testing of the laminate favorable. The appearance after humidity testing of the laminate, if the energy of the active energy ray upon curing the HRM composition is too low, a white bleeded object like powder spouting to the surface may occur at if left for over 24 hours in a high temperature and humid environment, e.g., 80°C and 85% environment, and the appearance may deteriorate.

In the present invention, as a method of obtaining the high-refractive-index film by curing the coating film of the HRM composition, for example, a method of curing the HRM composition upon producing the transfer film, a method of preparing a transfer film having a coating film of the HRM composition produced by partially curing the HRM composition (hereinafter referred to as "HRM composition partially cured coating film"), and jointly curing the HRM composition partially cured coating film when obtaining a bonding layer upon laminating the transfer film and substrate described later through the bonding film can be exemplified.

In the present invention, as the HRM composition, using a composition containing a diluting solvent having a dielectric constant at 25°C no more than 10, and causing the diluting solvent to dry after coating the HRM composition on the surface of the low-refractive-index film after hydrophilic treatment is preferable in the aspect of obtaining a high-refractive-index film excelling in abrasion resistance.

Substrate

As the substrate used in the present invention, a resin substrate and an inorganic substrate can be exemplified, for example.

As specific examples of the resin substrate, methacrylic resins such as polymethyl methacrylate, a copolymer in which methyl methacrylate units are the main constituents and copolymer in which alkyl methacrylate units are the main constituents; aromatic vinyl monomer unit-containing resins such as polystyrene and styrene-methyl methacrylate copolymer; olefinic resins such as cyclic polyolefins; polycarbonate resins (hereinafter referred to as "PC resin") such as polycarbonate; and multilayer materials of polycarbonate and a different type of material can be exemplified.

As a specific example of the inorganic substrate, glass can be exemplified.

Additives such as coloring agents and light diffusing agents can be contained as necessary in the substrate. In addition, although the substrate may be transparent or opaque, it is preferably transparent from the viewpoint of allowing ultraviolet irradiation from the substrate side.

Coating Film for Forming Bonding Layer

The coating film for forming the bonding layer is a coating film for forming the bonding layer described later.

As the coating film for forming the bonding layer, for example, a thermoplastic resin coating film containing a thermoplastic resin and a curable coating film containing an active energy ray curable composition can be exemplified.

In the case of the coating film for forming the bonding layer being a thermoplastic resin coating film containing a thermoplastic resin, as the bonding layer forming material to be used, for example, it is possible to use a thermoplastic resin solution in which the thermoplastic resin is dissolved in a diluting solvent.

As the diluting solvent that dissolves the thermoplastic resin, for example, methyl ethyl ketone, methyl isobutyl ketone, isopropanol, ethanol, 1- methoxy- 2- propanol and toluene can be exemplified.

As the thermoplastic resin for forming the thermoplastic resin coating film, for example, an acrylic resin, chlorinated olefinic resin, a vinyl chloride-vinyl acetate copolymer, a maleic acid-based resin, a chlorinated rubber-based resin, a cyclized rubber-based resin, a polyamide-based resin, a coumarone-indene-based resin, an ethylene-vinyl

acetate copolymer, a polyester resin, a polyurethane resin, a styrene resin, butyral resin, a rosin resin and an epoxy resin can be exemplified.

In the case of the coating film for forming the bonding layer being a curable coating film containing an active energy ray curable composition, it is possible to use a similar composition as the cross-linking component (A) in the LRM composition, for example, as the bonding layer forming material to be used.

The above-mentioned active energy ray curable compound for the curable coating film can be used independently or by combining two or more types.

As the photopolymerization initiator added to the above-mentioned active energy ray curable compound for the curable coating film, for example, one similar to the photoinitiator used in the case of blending into the LRM composition can be exemplified. These can be used independently, or by combining two or more types.

As the formation method of the thermoplastic resin coating film or the curable coating film containing an active energy ray curable composition, for example, a method of forming the thermoplastic resin coating film or the curable coating film containing the active energy ray curable composition by removing diluting solvent after coating the above-mentioned thermoplastic resin solution or active energy ray curable composition on the surface of the high-refractive-index film of the transfer film, on the surface of the high-refractive-index film of the transfer film upon laminating the transfer film and substrate, or on the surface of the substrate can be exemplified.

Laminate

The laminate is a laminate in which the high-refractive-index film and the low-refractive-index film have been laminated in this order on at least one side of the substrate.

The thickness of the laminate is preferably at least 0.2 mm from the aspect of the mechanical strength of the laminate, and is preferably no more than 10 mm from the aspect of the productivity of the laminate.

In the present invention, it is preferable to have a bonding layer between the substrate and the high-refractive-index film.

As the coating film forming the bonding layer, for example, a thermoplastic resin coating film for bonding layers containing a thermoplastic resin and a curable coating film for bonding layers containing an active energy ray curable composition can be exemplified.

As the thermoplastic resin forming the thermoplastic resin coating film for bonding layers, for example, an acrylic resin, chlorinated olefinic resin, a vinyl chloride-vinyl acetate copolymer, a maleic acid-based resin, a chlorinated rubber-based resin, a cyclized rubber-based resin, a polyamide-based resin, a coumarone-indene-based resin, an ethylene-vinyl acetate copolymer, a polyester resin, a polyurethane resin, a styrene resin, butyral resin, a rosin resin and an epoxy resin can be exemplified.

In the present invention, as the bonding layer formation material used in order to form the thermoplastic resin coating film for bonding layers, for example, it is possible to use a thermoplastic resin solution produced by diluting and dissolving the thermoplastic resin in a solvent.

As the diluting solvent that dissolves the thermoplastic resin, for example, methyl ethyl ketone, methyl isobutyl ketone, isopropanol, ethanol, 1- methoxy- 2- propanol and toluene can be exemplified.

As the active energy ray curable composition used in order to form the curable coating film for bonding layers, for example, a similar active energy ray curable compound as the cross-linker component (A) that can be added to the LRM composition can be exemplified.

As other examples other than compounds similar to the cross- linking component (A), urethane (meth) acrylate obtained by reacting at least three moles of acrylic monomer having active hydrogen such as 2- hydroxyethyl (meth) acrylate, 2- hydroxypropyl (meth) acrylate, 2- hydroxy- 3- methoxypropyl (meth) acrylate, N- methylol (meth) acrylamide, N- hydroxy (meth) acrylamide, 1, 2, 3- propane triol- 1, 3- di (meth) acrylate, 3- acryloyloxy- 2- hydroxypropyl (meth) acrylate, relative to 1 mole of polyisocyanate obtained by trimerizing a diisocyanate such as trimethylolproprane toluylene diisocyanate, hexamethylene diisocyante, tolylene diisocyanate, diphenylmethane diisocyanate, xylene diisocyanate, 4, 4'- methylene bis (cyclohexylisocyanate), isophorone diisocyanate and trimethylhexamethylene diisocyanate; poly[(meth) acryloyloxyethylene] isocyanurates such as a di (meth) acrylate or tri (meth) acrylate of tris (2- hydroxyethyl) isocyanuric acid; epoxy poly (meth) acrylate and urethane poly (meth) acrylate can be exemplified.

The above-mentioned active energy ray curable compounds can be used independently, or by combining two or more types.

As the photopolymerization initiator, for example, one similar to the photoinitiator used in the case of blending into the LRM composition can be exemplified. These can be used independently, or by combining two or more types.

Method of Producing Laminate

As the method of producing the laminate of the present invention, for example, a production method consisting

of a step of forming a transfer film laminated article by pasting the substrate together with a face of the high-refractive-index film of the transfer film via a coating film for forming the bonding layer (transfer film laminate formation step), a step of forming the transfer film laminate with the bonding layer from the coating film for forming the bonding layer (transfer film laminate formation step), and a step of obtaining the laminate by tearing the peeling film from the transfer film laminate (laminate formation step).

Transfer Film Laminated Article

The transfer film laminated article has the above-mentioned transfer film laminated so that a coating film for forming the bonding layer faces with the face of the high-refractive-index film, via the coating film for forming the bonding layer on the surface of the substrate.

Transfer Film Laminated Article Formation Step

The transfer film laminated article formation step is a step of forming the transfer film laminate article by pasting the substrate together with the face of the high-refractive-index film of the transfer film via the coating film for forming the bonding layer.

Hereinafter, examples will be illustrated for a method of forming the transfer film laminated article for the case of using a thermoplastic resin coating film for bonding layers as the bonding layer, and the case of using the curable coating film for bonding layers, respectively.

(1) Thermoplastic Resin Coating Film for Bonding Layers

In the case of using the thermoplastic resin coating film for bonding layers as the coating film forming the bonding layer, it is possible to obtain the transfer film laminated article by pasting the substrate and transfer film together via the thermoplastic resin coating film for bonding layers in the transfer film laminated article formation step. The thermoplastic resin coating film for bonding layers may be provided in advance to the transfer film, or may be provided in advance to the substrate.

As the method of forming the thermoplastic resin coating film for the bonding layer, for example, a method of forming the thermoplastic resin coating film for bonding layers by removing the diluting solvent after coating the above-mentioned thermoplastic resin solution on the surface of the high-refractive-index film of the transfer film or the surface of the substrate can be exemplified.

As the method of coating the thermoplastic resin solution in the case of using a thermoplastic resin solution, for example, a similar method to the method of coating the LRM composition can be exemplified.

(2) Curable Coating Film Containing Active Energy Ray Curable Composition

In the case of using a curable coating film for bonding layers as the coating film forming the bonding layer, the transfer film laminated article is obtained by pasting the substrate and the transfer film together via the curable coating film for bonding layers in the transfer film laminated article formation step. The curable coating film for bonding layers may be provided in advance to the transfer film, or may be provided in advance to the substrate.

In order to prevent air trapping upon laminating the substrate and transfer film, it is preferable to establish a state in which the curable coating film for bonding layers is formed using an excessive amount of the material for forming the curable coating film for bonding layers.

As the method of coating the active energy ray curable composition for forming the curable coating film for bonding layers, for example, a similar method to the method of coating the LRM composition can be exemplified. As the method of laminating the substrate and transfer film, for example, a method of pressure bonding with a rubber roller can be exemplified. Upon pressure bonding, it is possible to pressure bond at a condition of 5 to 15 MPa, for example. In addition, it is preferable to heat the laminating surface of the substrate to 40 to 125°C in the aspect of adherence with the transfer film.

Bonding Layer

In the present invention, the bonding layer is for bonding the transfer film and the substrate.

In the present invention, as the stage at which to form the bonding layer, it may be either case among a case of inserting in a state laminated on the surface of the high-refractive-index film as the transfer film, and a case of forming the bonding layer between the transfer film and substrate upon laminating the transfer film and substrate.

In addition, if the refractive index difference between the substrate and bonding layer increases and a refraction

interface clearly exists, the reflectance of light will occur at the interface between the substrate and bonding layer, and this will cause a new interference figure. Therefore, in order to eliminate the refraction interface between the substrate and bonding layer, it is preferable for the bonding layer to sufficiently permeate the substrate, or suppress the refractive index difference between the substrate and bonding layer to no more than 0.03.

In the present invention, as the method of forming the bonding layer, in the case of using a thermoplastic resin solution produced by dissolving the thermoplastic resin in a diluting solvent as the bonding layer forming material, for example, a method of obtaining the bonding layer by volatilizing the diluting solvent by way of a known method can be exemplified. In addition, as the bonding layer forming material, for example, in the case of using an active energy ray curable composition diluted in a diluting solvent, a method of curing at similar conditions to the active energy ray curing conditions upon curing the HRM composition after volatilizing the diluting solvent by way of a known method can be exemplified.

In addition, in the present invention, in the case of forming the bonding layer using the active energy ray curable composition, it is possible to jointly cure the partially cured product of the LRM composition and the partially cured product of the HRM composition together with curing of the coating film for forming the bonding layer.

Transfer Film Laminate

The transfer film laminate has the bonding layer, high-refractive-index film, low-refractive-index film and peeling film sequentially laminated on the surface of the substrate.

Transfer Film Laminate Formation Step

In the present invention, the transfer film laminate formation step is a step for obtaining the bonding layer from the coating film for forming the bonding layer.

An example of a method of forming the transfer film laminate in the case of using the thermoplastic resin coating film as the coating film for forming the bonding layer and the case of using the curable coating film for bonding layers, respectively, will be illustrated below.

(1) Case of Obtaining Transfer Film Laminate Using Thermoplastic Resin Coating Film for Bonding Layers

In the transfer film laminate formation step, it is possible to bond the substrate and the high-refractive-index film by obtaining the bonding layer by at least one process among pressure treatment and heat treatment on the transfer film laminated article obtained in the transfer film laminated article formation step.

As a pressure treatment method, for example, a method of pressure bonding with a rubber roller can be exemplified. As the pressure condition, for example, 5 to 15 MPa can be exemplified.

As the heat treatment method, for example, a method of heating the substrate can be exemplified. As the heating condition, for example, 40 to 125°C can be exemplified. By setting the heating condition to this condition, it is possible to make the adhesion between the transfer film and substrate favorable, there is no hardness decline due to excess dissolution of the substrate, and slight yellowing of the bonding layer.

The surface temperature of the substrate upon heating the substrate can be adjusted by the set temperature of the heater, heating time, etc. As the measuring method of the substrate temperature, for example, a method using a non-contact-type surface thermometer can be exemplified.

It should be noted that, in the present invention, the formation of the transfer film laminate may be conducted simultaneously with the formation of the transfer film laminated article.

In the present invention, it is possible to obtain an adequately cured low-refractive-index film by promoting the curing of the low-refractive-index film during the above-mentioned heat treatment as necessary.

In addition, in the present invention, it is possible to obtain an adequately cured low-refractive-index film by promoting the curing of the low-refractive-index film by irradiating active energy rays in addition to the above-mentioned treatment, as necessary.

(2) Case of Obtaining Transfer Film Laminate Using Curable Coating Film for Bonding Layers

In the transfer film laminate formation step, it is possible to form a bonding layer by curing the curable coating film for bonding layers by irradiating active energy rays onto the transfer film laminated article obtained in the transfer film laminated article formation step.

The irradiation of active energy rays onto the transfer film laminated article can be conducted through the peeling film. In addition, depending on the shape and characteristics of the substrate, the active energy rays may be irradiated from the substrate side as necessary.

As the above-mentioned active energy rays, for example, ultraviolet rays can be exemplified. As the light source when irradiating ultraviolet rays, for example, a high pressure mercury lamp, metal-halide lamp and fluorescent ultraviolet lamp can be exemplified.

As the active energy ray irradiation conditions, for example, conditions of a peak illumination of at least 100 $mW/cm^2$ and accumulated light amount of at least 10 $mJ/cm^2$ can be exemplified.

In the present invention, upon curing the curable coating film for bonding layers, it is possible to obtain an adequately cured low-refractive-index film by promoting the curing of the low-refractive-index film as necessary.

Laminate Formation Step

In the present invention, the laminate formation step is a step of obtaining a laminate by peeling the peeling film from the transfer film laminate. Upon peeling the peeling film from the transfer film laminate, for example, it is possible to peel the peeling film at room temperature from the transfer film laminate by way of a known method.

EXAMPLES

Hereinafter, the present invention will be explained by way of Examples. It should be noted that the abbreviations of the compounds used in the Examples and Comparative Examples are as follows. In addition, "parts" and "%" indicate "parts by mass" and "% by mass" in the following, respectively.
"TAS": succinic acid / trimethylolethane / acrylic acid (mole ratio 1/2/4) condensation mixture
"C6DA": 1, 6- hexanediol diacrylate (tradename: Biscoat #230, manufactured by Osaka Organic Chemical Industry Ltd.)
"M305": pentaerythritol triacrylate (tradename: ARONIX M305, manufactured by Toagosei Co., Ltd.)
"M400": dipentaerythritol hexacrylate (tradename: ARONIX M400, manufactured by Toagosei Co., Ltd.)
"DAC": solution of fluorine group- containing polyether compound having active energy ray curability containing perfluoropolyether group and nitrogen atom (solid content concentration 20%; 2, 2, 3, 3- tetrafluoro- 1- propanol solution; tradename: OPTOOL DAC, manufactured by Daikin Industries, Ltd.)
"TPO": 2, 4, 6- trimethylbenzoyl diphenyl- phosphine oxide (tradename: DAROCUR TPO, manufactured by BASF Japan)
"DAROCUR": 2, 4, 6- trimethylbenzoyl diphenyl- phosphine oxide (tradename: DAROCUR TPO, manufactured by BASF Japan)
"IRGACURE": 1- hydroxy- cyclohexyl- phenyl- ketone (tradename: IRGACURE 184, manufactured by BASF Japan)
"KBM503": 3- methacryloxypropyltrimethoxysilane (tradename: Shin- Etsu silicone KBM503, manufactured by Shin-Etsu Chemical Co., Ltd.)
"Through Rear S": isopropyl alcohol (IPA) dispersion of hollow silica sol (20% solid content concentration) (tradename: Through Rear S, manufactured by JGC Catalysts and Chemicals, Ltd.)
"PGM": 1- methoxy- 2- propanol (manufactured by Wako Pure Chemical Industries, Ltd.; first reagent grade)
"IPA": isopropanol (manufactured by Wako Pure Chemical Industries, Ltd.; first reagent grade)
"Toluene": (manufactured by Wako Pure Chemical Industries, Ltd.; first reagent grade)
"Xylene": (manufactured by Wako Pure Chemical Industries, Ltd.; first reagent grade)
"ZRT": toluene dispersion of zirconia (15% solid content concentration) (trade name: nanotech ZRT15WT%- E28, manufactured by CI KASEI CO., LTD.)
"KBM602": N- 2- (aminoethyl)- 3- aminopropyl methyldimethoxysilane (tradename: Shin- Etsu silicone KBM602, manufactured by Shin- Etsu Chemical Co., Ltd.)
"KBM603": N- 2- (aminoethyl)- 3- aminopropyl trimethoxysilane (tradename: Shin- Etsu silicone KBM603, manufactured by Shin- Etsu Chemical Co., Ltd.)
"Acrylite": methacrylic resin plate (tradename: Arylite EX001, manufactured by Mitsubishi Rayon Co., Ltd.)
"Panlite": polycarbonate resin plate (tradename: Panlite AD- 5503, manufactured by Teijin, Ltd.)

An evaluation method conducted on the present invention will be shown below.

(1) Temperature of Substrate

In the measurement of the surface temperature of a substrate, a non-contact type surface thermometer (Handheld-type radiation thermometer IR-TA, manufactured by Chino Corp.) was used.

(2) Total Luminous Transmittance and Haze Value

Using a haze meter (HAZE METER NDH2000 (tradename), manufactured by Nippon Denshoku Industries Co., Ltd.), the total luminous transmittance of the laminate was measured based on the measurement method illustrated in JIS K7361- 1, and the haze value was measured based on the measurement method illustrated in JIS K7136.

(3) Abrasion Resistance

Abrasion resistance was evaluated by placing a circular pad with a diameter of 25.4 mm on which #0000 steel wool was mounted on the surface of the low-refractive-index film of the laminate, scratching a distance of 20 mm back and forth 10 times under a load of 2.0 kg, obtaining a difference of a haze value (Δ haze) before scratching and after scratching according to the following formula, and then counting the number of scratches in the sample surface after testing.

Δ haze (%)] = [haze value (%) after scratching] - [haze value (%) before scratching

(4) Antireflection Property (reflectance, reflected color variation)

With a substrate in which a surface on which the low-refractive-index film of the laminate is not laminated roughened with sand paper, and then painted with matt black spray paint as an evaluation sample, the reflectance of the surface of the low-refractive-index film of the sample was measured based on the measurement method shown in JIS R3106 with an incidence angle of 5° and wavelength range of 380 to 780 nm, using a spectrophotometer (trademark: Hitachi Spectrophotometer U-4000, manufactured by Hitachi, Ltd.), and the wavelength having the lowest reflectance on the obtained reflectance curve (bottom wavelength) and the reflectance at the bottom wavelength (bottom wavelength reflectance) were obtained. In addition, the presence of change in the reflected colors when a fingerprint had adhered to the surface of the low-refractive-index film of the laminate was evaluated with the following criteria.
◎; no change in reflected colors recognized
○: slight change in reflected colors recognized
×: change in reflected colors recognized

(5) Antifouling Property

The antifouling property of the low-refractive-index film of the laminate was evaluated according to the below described water contact angle, triolein contact angle and oil-based ink wiping property.

(a) Water Contact Angle

Under an environment of 23°C and 50% relative humidity, 0.2 μL of ion exchange water was dropped onto the surface of the low-refractive-index film, and the contact angle of the water relative to the low-refractive-index film after transfer was measured using a portable contact angle measuring device (tradename: PG-X, manufactured by Fibro System AB).

(b) Triolein Contact Angle

The triolein contact angle was obtained similarly to the case of the measurement of the water contact angle, except for using triolein in place of ion exchange water.

(c) Oil-based Ink Wiping Property

A line was drawn with oil-based ink (black) (tradename: Myname (black), manufactured by Sakura Color Products Corp.) on the surface of the low-refractive-index film of the laminate, and after 3 minutes, was wiped with a paper towel (tradename: Kimtowel, manufactured by Nippon Paper Crecia Co., Ltd.), and the wiped state of the oil-based ink upon doing so was evaluated visually with the following criteria.
◎: oil-based ink completely wiped off by wiping 5 times
o: tracks of oil-based ink remain slightly with wiping 5 times
×: at least a part of the oil-based ink remains adhered with wiping 5 times

(6) Adherence

Peeling evaluation of 25 matrix cells was conducted at 4 locations based on JIS K5600-5-6, and the adherence of the low-refractive-index film of the laminate was evaluated by the number of cells remaining without peeling among

100 cells.

(7) Film Thickness of Each Layer

A sample with a width of 100 nm was cut with a microtome in the thickness direction of the laminate, the cross-section of the laminate was observed with a transmission electron microscope (JEM- 1010 (tradename), manufactured by JEOL, Ltd.) to measure the film thickness of each layer.

(8) Perspiration Resistance

Artificial perspiration liquid was prepared based on method A of the test method for color fastness to perspiration of JIS L0848. A laminate cut to a size of 50 x 50 mm was established as the evaluation sample. Next, absorbent cotton was cut to a size of 30 x 30 mm, placed on the evaluation sample, and using a syringe, artificial perspiration liquid was dropped onto the absorbent cotton to wet the absorbent cotton. After leaving this sample in a thermo-hygrostat at a temperature of 45°C and relative humidity of 95% for 96 hours, the surface of the laminate was washed with water, and then the perspiration resistance was evaluated with the following criteria by visual evaluation.
○: no color variation recognized
×: color variation recognized

(9) Dielectric Constant of Diluting Solvent

The dielectric constant of the diluting solvent was measured using a liquid dielectric constant meter (tradename: MODEL871, manufactured by Nippon Rufuto Co., Ltd.). The temperature during measurement was 25°C.

(10) Durability Test

The laminate was left for 5 days under an environment at 80°C and 85%, after which the appearance of the surface of the laminate was observed.
○: no color variation recognized
x: whitening recognized

(10) Refractive Index

The refractive index was measured with a 594 nm laser using a film thickness and refractive index measuring device (tradename: Model 2010 Prism Coupler, manufactured by Metricon Corp.).

Production Example 1

Production of Hydrolysis Treated and Condensation Reaction Treated Silica Sol (1)

To a 4-neck flask reaction vessel equipped with a stirrer and a condenser tube, 63 g of Through Rear S was loaded, and then 12 g of KBM503 was added. Subsequently, 4.4 g of water and 0.1 g of a 0.01 mol/L hydrochloric acid aqueous solution were sequentially added while stirring, and heating was performed for 2 hours at 80°C. Next, the reaction system was made a reduced-pressure state, and the volatile component was distilled until the solid content concentration became 40%, after which 38 g of toluene was added and heated for 2 hours at 80°C. Subsequently, the reaction system was made a reduced-pressure state and the volatile component was distilled until the solid content concentration became 60%, and was further heated for 2 hours at 80°C, thereby obtaining the hydrolysis treated and condensation reaction treated silica sol (1).
The obtained silica sol (1) was a cloudy liquid, and the solid content concentration was 60%. It should be noted that solid content concentration is obtained by heating and drying the silica sol (1) in an environment at 80°C for 3 days, and calculation from the mass difference before and after drying. It should be noted that the proportion (%) of inorganic particles (B) in the silica sol (1) was obtained by the mass fraction of inorganic particles relative to a total of 100 parts of the hydrolysable compound used and the inorganic particles (B).

Compounding Example 1

Compounding of LRM Composition (1)

The LRM composition (1) (1.04% total solid content concentration) was compounded by taking 1 part DAC (20% solid content) as monomer (A), 1.08 parts silica sol (1) obtained in the preparation example (60% solid content) as the inorganic particles (B), 0.15 parts M400 as the cross-linking component (A) and 0.05 parts IRGACURE as the photoinitiator, and mixing into 98.5 parts diluting solvent PGM. It should be noted that the monomer (A) was 19.1 parts relative to 100 parts solid content in the composition.

Compounding Examples 2 to 14

Compounding of Compositions for High-Refractive-Index Film (1) to (13)

As the HRM composition, the raw materials shown in Table 1 were blended at the proportions shown in Table 1 to compound the HRM compositions (1) to (13).

[Table 1]

| Production Example | | | | 1 | 2 | 3 | 4 | 5 | 6 | 7 | 8 | 9 | 10 | 11 | 12 | 13 |
|---|---|---|---|---|---|---|---|---|---|---|---|---|---|---|---|---|
| HRM composition | | | | (1) | (2) | (3) | (4) | (5) | (6) | (7) | (8) | (9) | (10) | (11) | (12) | (13) |
| Composition | Metal oxide particles | ZRT | Solid content (parts) | 60 | 60 | 60 | 60 | 60 | 60 | 60 | 60 | 60 | 60 | 60 | 60 | 60 |
| | | | Toluene (parts) | 340 | 340 | 340 | 340 | 340 | 340 | 340 | 340 | 340 | 340 | 340 | 340 | 340 |
| | | | Solution (parts) | 400 | 400 | 400 | 400 | 400 | 400 | 400 | 400 | 400 | 400 | 400 | 400 | 400 |
| | Aminosilane | KBM602 | Solid content (parts) | 10 | 10 | 10 | 10 | 10 | 10 | 10 | 10 | 0 | 0 | 5 | 20 | 30 |
| | | | Solution (parts) | 10 | 10 | 10 | 10 | 10 | 10 | 10 | 10 | 0 | 0 | 5 | 20 | 30 |
| | | KBM603 | Solid content (parts) | 0 | 0 | 0 | 0 | 0 | 0 | 0 | 0 | 10 | 0 | 0 | 0 | 0 |
| | | | Solution (parts) | 0 | 0 | 0 | 0 | 0 | 0 | 0 | 0 | 10 | 0 | 0 | 0 | 0 |
| | Cross-linking component | M400 | Solid content (parts) | 30 | 30 | 30 | 30 | 30 | 30 | 30 | 30 | 30 | 40 | 35 | 20 | 10 |
| | | | Solution (parts) | 30 | 30 | 30 | 30 | 30 | 30 | 30 | 30 | 30 | 40 | 35 | 20 | 10 |
| | Photoinitiator | DAROCUR | Solid content (parts) | 2 | 2 | 2 | 2 | 2 | 2 | 2 | 2 | 2 | 2 | 2 | 2 | 2 |
| | Added diluting solvent | Toluene | (parts) | 0 | 0 | 0 | 0 | 100 | 150 | 200 | 0 | 0 | 0 | 0 | 0 | 0 |
| | | IPA | (parts) | 200 | 340 | 400 | 800 | 100 | 50 | 0 | 100 | 200 | 200 | 200 | 200 | 200 |
| | | Xylene | (parts) | 0 | 0 | 0 | 0 | 0 | 0 | 0 | 100 | 0 | 0 | 0 | 0 | 0 |
| | Ratio and dielectric constant of each diluting solvent in diluting solvent | Toluene | (%) | 63.0 | 50.0 | 45.9 | 29.8 | 81.5 | 90.7 | 100.0 | 63.0 | 63.0 | 63.0 | 63.0 | 63.0 | 63.0 |
| | | IPA | (%) | 37.0 | 50.0 | 54.1 | 70.2 | 18.5 | 9.3 | 0.0 | 18.5 | 37.0 | 37.0 | 37.0 | 37.0 | 37.0 |
| | | Xylene | (%) | 0 | 0 | 0 | 0 | 0 | 0 | 0 | 18.5 | 0 | 0 | 0 | 0 | 0 |
| | | Diluting solvent dielectric constant (calculated) | | 6.08 | 8.55 | 9.38 | 13.04 | 3.6 | 2.89 | 2.38 | 6.42 | 6.08 | 6.08 | 6.08 | 6.08 | 6.08 |
| | Solid content concentration | | (%) | 15.9 | 13.0 | 12.1 | 8.2 | 15.9 | 15.9 | 15.9 | 15.9 | 15.9 | 15.9 | 15.9 | 15.9 | 15.9 |

Example 1

A coating film of the LRM composition (1) was formed by compounding the LRM composition (1) in a 25°C environment and leaving for 30 minutes in the 25°C environment, followed by coating using a No. 10 bar coater on the surface of a PET film having a thickness of 100 μm (tradename: A4100, Toyobo), and drying for 1.5 minutes at 100°C, and a further minute at 150°C. It should be noted that the interface surface tension of the PET surface was 42 mN/m.

Next, the PET film on which the coating film of the LRM composition (1) had been laminated was made to pass a location a position 20 cm below a 9.6 kW high- pressure mercury lamp (100% output setting) under a nitrogen flow at a speed of 4.5 m/min to cure the coating film of the LRM composition (1), thereby obtaining a laminate film on which the low- refractive- index film was formed. The accumulated light amount at this time was 400 $mJ/cm^2$, and the peak illumination was 260 $mW/cm^2$.

Next, on a SUS electrode with a thickness of 1 mm and length of 260 mm with the laminate film arranged over a conveyor belt with the face of the low- refractive- index film as the top face being disposed above the conveyor belt, corona treatment was conducted by leading the electrode lower part in a region corona discharging with an applied voltage of 11.6 kV using a corona treatment device POLYDYNE (tradename) manufactured by Navitas, with a gap between the film and electrode of 3 mm and conveyor speed of 2.0 m/min. The irradiation energy onto the surface of the low- refractive- index film at this time was 100 W·min/m.

Next, the HRM composition (1) was compounded in a 25°C environment and left for 30 minutes in the 25°C environment, and then coated using a No. 10 bar coater onto the surface of the low- refractive- index film of the laminate film subjected to corona treatment, then was allowed to dry for 1.5 minutes at 100°C, and for a further minute at 150°C to form the coating film of the HRM composition (1), thereby obtaining a laminate film on which a coating film of the HRM composition (1) was laminated.

Subsequently, the laminate film on which the coating film of the HRM composition (1) was laminated was made to pass a location a position 20 cm below a 9.6 kW high- pressure mercury lamp (100% output setting) under air at a speed of 4.5 m/min to cure the coating film of the HRM composition (1), thereby obtaining a film on which the high-refractive- index film was laminated. It should be noted that the high- pressure mercury lamp employed two lights being illuminated. At this time, the accumulated light amount was 800 $mJ/cm^2$, and the peak illumination was 260 $mW/cm^2$.

Next, an active energy ray curable composition for bonding layers produced by mixing 35 parts TAS, 30 parts C6DA, 10 parts M305, 25 parts M400 and 2 parts DAROCUR was compounded in a 25°C environment, left for 30 minutes in the 25°C environment, then coated on the surface of the high- refractive- index film of the film on which the coating film of the HRM composition (1) was laminated using a No. 10 bar coater, thereby obtaining a transfer film. It should be noted that cissing did not occur upon forming the coating film of the active energy ray curable composition for bonding layers on the surface of the high- refractive- index film.

Using Acrylite with a sheet thickness of 2 mm as the substrate, the above-mentioned transfer film was laminated on the surface of the substrate heated to 60°C such that the coating film of the active energy ray curable composition for bonding layers contacted the surface of the substrate.

Next, so that the thickness of the bonding layer became about 15 μm, the active energy ray curable composition for bonding layers was pressure bonded so as not to contain bubbles while drawing out using a rubber roller with JIS hardness 40°, thereby obtaining a transfer film laminated article. It should be noted that the thickness of the bonding layer was calculated from the supplied amount of the active energy ray curable composition and the spreading area.

After 60 seconds had elapsed in a state in which the transfer film laminated article was heated to 60°C, it was made to pass a location a position 20 cm below a 9.6 kW output metal hydride lamp via a PET film at a speed of 2.5 m/min to cure the active energy ray curable composition for bonding layers and form the bonding layer, thereby obtaining a transfer film laminate. As the curing conditions for obtaining the transfer film laminate, the accumulated light amount was 570 $mJ/cm^2$, and the peak illumination was 220 $mW/cm^2$.

Subsequently, a laminate was obtained by peeling the PET film from the transfer film laminate. The film thickness of the bonding layer in the obtained laminate was 13 μm. The evaluation results are shown in Table 2.

Upon measuring the respective film thicknesses of the low-refractive-index film and the high-refractive-index film of the laminate, the film thickness of the low-refractive-index film was 100 nm, and the film thickness of the high-refractive-index film was 1400 nm. In addition, the refractive index (Nx) of the low-refractive-index film was 1.400, and the refractive index (Ny) of the high-refractive-index film was 1.600. Furthermore, various evaluation results for the laminate were as shown in Table 2.

Examples 2 to 9

Laminates were obtained similarly to Example 1, except for using the HRM compositions (2) to (9) in place of the HRM composition (1). The evaluation results are shown in Table 2.

Example 10

A laminate was obtained similarly to Example 1, except for setting the time left in a 25°C environment of the HRM composition (4) to 24 hours. The evaluation results are shown in Table 3.

Example 11

A laminate was obtained similarly to Example 3, except for setting the time left in a 25°C environment of the HRM composition (3) to 24 hours. The evaluation results are shown in Table 3.

Example 12

A laminate was obtained similarly to Example 4, except for setting the time left in a 25°C environment of the HRM composition (4) to 24 hours. The evaluation results are shown in Table 3.

Example 13

A laminate was obtained similarly to Example 1, except for using Panlite with a sheet thickness of 2 mm as the substrate. The evaluation results are shown in Table 3.

Examples 14 to 16

Laminates were obtained similarly to Example 1, except for using the HRM compositions (11) to (13) in place of the HRM composition (1). The evaluation results are shown in Table 3.

Comparative Example 1

A laminate was obtained similarly to Example 1, except for using the HRM composition (1) in place of the curable composition (10) of the high-refractive-index film. The evaluation results are shown in Table 3. Since aminosilane is not added to the high-refractive-index film, the abrasion resistance of the laminate was not sufficient.
[Table 2]

| | | | | Example 1 | Example 2 | Example 3 | Example 4 | Example 5 | Example 6 | Example 7 | Example 8 | Example 9 |
|---|---|---|---|---|---|---|---|---|---|---|---|---|
| Low-refractive-index film | LRM composition | | | (1) | (1) | (1) | (1) | (1) | (1) | (1) | (1) | (1) |
| | Ultraviolet curing conditions | Peak illumination | mW/cm² | 260 | 260 | 260 | 260 | 260 | 260 | 260 | 260 | 260 |
| | | Accumulated light amount | mJ/cm² | 400 | 400 | 400 | 400 | 400 | 400 | 400 | 400 | 400 |
| | Refractive index (Nx) | | | 1.400 | 1.400 | 1.400 | 1.400 | 1.400 | 1.400 | 1.400 | 1.400 | 1.400 |
| | thickness | | nm | 100 | 100 | 100 | 100 | 100 | 100 | 100 | 100 | 100 |
| High-refractive-index film | HRM composition | | | (1) | (2) | (3) | (4) | (5) | (6) | (7) | (8) | (9) |
| | Ultraviolet curing conditions | Peak illumination | mW/cm² | 260 | 260 | 260 | 260 | 260 | 260 | 260 | 260 | 260 |
| | | Accumulated light amount | mJ/cm² | 800 | 800 | 800 | 800 | 800 | 800 | 800 | 800 | 800 |
| | Refractive index (Ny) | | | 1.600 | 1.600 | 1.600 | 1.600 | 1.600 | 1.600 | 1.600 | 1.600 | 1.600 |
| | thickness | | nm | 1400 | 1200 | 1000 | 700 | 1400 | 1400 | 1400 | 1400 | 1400 |
| Production of laminate | Temperature | | °C | 60 | 60 | 60 | 60 | 60 | 60 | 60 | 60 | 60 |
| | Time | | Sec. | 60 | 60 | 60 | 60 | 60 | 60 | 60 | 60 | 60 |
| | Ultraviolet curing conditions | Peak illumination | mW/cm² | 220 | 220 | 220 | 220 | 220 | 220 | 220 | 220 | 220 |
| | | Accumulated light amount | mJ/cm² | 570 | 570 | 570 | 570 | 570 | 570 | 570 | 570 | 570 |
| | Type of substrate | | | Methacrylic resin | Methacrylic resin | Methacrylic resin | Methacrylic resin | Methacrylic resin | Methacrylic resin | Methacrylic resin | Methacrylic resin | Methacrylic resin |
| Evaluation results of laminate | Total luminous transmittance | | % | 94.8 | 94.8 | 95 | 95.2 | 94.8 | 94.8 | 94.8 | 94.8 | 94.8 |
| | Haze | | % | 0.4 | 0.4 | 0.4 | 0.35 | 0.4 | 0.4 | 0.4 | 0.4 | 0.4 |
| | Abrasion resistance | Δhaze | % | 0.05 | 0.08 | 0.1 | 0.15 | 0.05 | 0.05 | 0.05 | 0.05 | 0.05 |
| | | Number of scratches | lines | 1 | 1 | 2 | 3 | 1 | 1 | 0 | 1 | 1 |
| | Antireflection property | Bottom wavelength | nm | 620 | 620 | 620 | 620 | 620 | 620 | 620 | 620 | 620 |
| | | Bottom reflectance | % | 1.0 | 1.0 | 0.9 | 0.85 | 1.0 | 1.0 | 1.0 | 1.0 | 1.0 |
| | | Presence of change in reflected color | | ◎ | ◎ | ◎ | ◎ | ◎ | ◎ | ◎ | ◎ | ◎ |
| | Antifouling property | Water contact angle | Degrees | 105 | 110 | 108 | 110 | 106 | 106 | 108 | 107 | 105 |
| | | Triolein contact angle | Degrees | 65 | 56 | 64 | 63 | 66 | 64 | 63 | 64 | 65 |
| | | Oil-based ink wiping property | | ◎ | ◎ | ◎ | ◎ | ◎ | ◎ | ◎ | ◎ | ◎ |
| | Adherence | | | 100/100 | 100/100 | 100/100 | 100/100 | 100/100 | 100/100 | 100/100 | 100/100 | 100/100 |
| | Perspiration resistance | | | ○ | ○ | ○ | ○ | ○ | ○ | ○ | ○ | ○ |
| | Durability | | | ○ | ○ | ○ | ○ | ○ | ○ | ○ | ○ | ○ |

[Table 3]

| | | | | Example 10 | Example 11 | Example 12 | Example 13 | Comparative example 1 | Example 14 | Example 15 | Example 16 |
|---|---|---|---|---|---|---|---|---|---|---|---|
| Low-refractive-index film | LRM composition | | | (1) | (1) | (1) | (1) | (1) | (1) | (1) | (1) |
| | Ultraviolet curing conditions | Peak illumination | mW/cm² | 260 | 260 | 260 | 260 | 260 | 260 | 260 | 260 |
| | | Accumulated light amount | mJ/cm² | 400 | 400 | 400 | 400 | 400 | 400 | 400 | 400 |
| | Refractive index | | | 1.40 | 1.40 | 1.40 | 1.40 | 1.40 | 1.40 | 1.40 | 1.40 |
| | thickness | | nm | 100 | 100 | 100 | 100 | 100 | 100 | 100 | 100 |
| High-refractive-index film | HRM composition | | | (1) | (3) | (4) | (1) | (10) | (11) | (12) | (13) |
| | Ultraviolet curing conditions | Peak illumination | mW/cm² | 260 | 260 | 260 | 260 | 260 | 260 | 260 | 260 |
| | | Accumulated light amount | mJ/cm² | 800 | 800 | 800 | 800 | 800 | 800 | 800 | 800 |
| | Refractive index | | | 1.600 | 1.600 | 1.600 | 1.600 | 1.600 | 1.610 | 1.600 | 1.599 |
| | thickness | | nm | 1400 | 1000 | 700 | 1400 | 1400 | 1400 | 1400 | 1400 |
| Production of laminate | Temperature | | °C | 60 | 60 | 60 | 60 | 60 | 60 | 60 | 60 |
| | Time | | Sec. | 60 | 60 | 60 | 60 | 60 | 60 | 60 | 60 |
| | Ultraviolet curing conditions | Peak illumination | mW/cm² | 220 | 220 | 220 | 220 | 220 | 220 | 220 | 220 |
| | | Accumulated light amount | mJ/cm² | 570 | 570 | 570 | 570 | 570 | 570 | 570 | 570 |
| | Type of substrate | | | Methacrylic resin | Methacrylic resin | Methacrylic resin | Methacrylic resin | PC resin | Methacrylic resin | Methacrylic resin | Methacrylic resin |
| Evaluation results of laminate | Total luminous transmittance | | % | 94.8 | 95 | 95.2 | 94.8 | 94.8 | 94.8 | 94.8 | 94.8 |
| | Haze | | % | 0.4 | 0.4 | 0.35 | 0.6 | 0.4 | 0.4 | 0.4 | 0.4 |
| | Abrasion resistance | Δhaze | % | 0.08 | 0.15 | 0.35 | 0.1 | 2 | 0.09 | 0.04 | 0.02 |
| | | Number of scratches | lines | 2 | 3 | 7 | 2 | 25 | 2 | 1 | 0 |
| | Antireflection property | Bottom wavelength | nm | 620 | 620 | 620 | 620 | 620 | 620 | 620 | 620 |
| | | Bottom reflectance | % | 1.0 | 0.9 | 0.85 | 1.0 | 1.0 | 1.0 | 1.0 | 1.0 |
| | | Presence of change in reflected color | | ◎ | ◎ | ◎ | ◎ | ◎ | ◎ | ◎ | ◎ |
| | Antifouling property | Water contact angle | Degrees | 105 | 106 | 107 | 105 | 105 | 102 | 101 | 109 |
| | | Triolein contact angle | Degrees | 66 | 67 | 66 | 65 | 65 | 65 | 65 | 65 |
| | | Oil-based ink wiping property | | ◎ | ◎ | ◎ | ◎ | ◎ | ◎ | ◎ | ◎ |
| | Adherence | | | 100/100 | 100/100 | 100/100 | 100/100 | 100/100 | 100/100 | 100/100 | 100/100 |
| | Perspiration resistance | | | ○ | ○ | ○ | ○ | ○ | ○ | ○ | ○ |
| | Durability | | | ○ | ○ | ○ | ○ | ○ | ○ | ○ | ○ |

## Claims

1. A transfer film having a low-refractive-index film with a refractive index (Nx) and a high-refractive-index film with a refractive index (Ny) laminated in this order on one side of a peeling film,
wherein the refractive index is measured with a 594 nm wavelength laser, and satisfies the following formula (1), and wherein the high-refractive-index film is formed from a high-refractive-index film composition containing aminosilane,

$$Nx<Ny \quad (1).$$

2. The transfer film according to claim 1, wherein the refractive index (Nx) of the low-refractive-index film is no more than 1.5, and the refractive index (Ny) of the high-refractive-index film is at least 1.55.

3. The transfer film according to claim 1 or 2, wherein the low-refractive-index film contains: a polymer containing units of monomer (A) having a perfluoropolyether group and nitrogen atoms; and inorganic particles.

4. The transfer film according to claim 3, wherein the monomer (A) is a monomer (A-1) represented by the below structural formula (1),

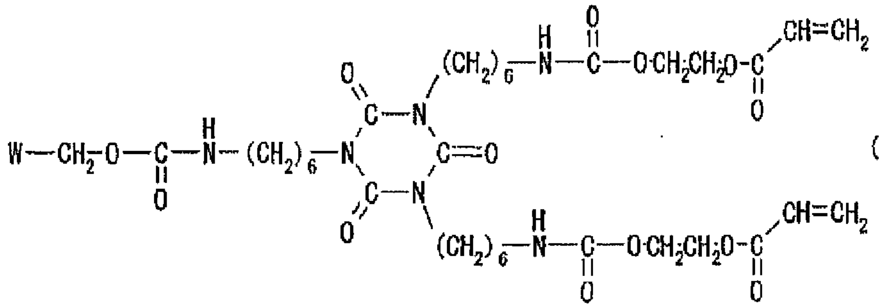

(1)

wherein W represents a perfluoropolyether group.

5. A method for producing a transfer film in which a low- refractive- index film having a refractive index (Nx) and a high-refractive- index film having a refractive index (Ny) are laminated in this order on one side of a peeling film, wherein the refractive index is measured with a 594 nm wavelength laser, and satisfies the following formula (1), wherein the high- refractive- index film is formed from a high- refractive- index film composition containing aminosilane, and
wherein the method comprises forming the low- refractive- index film on a surface of the peeling film, hydrophilic treating a surface of the low- refractive- index film, and coating a high- refractive- index film composition containing aminosilane to form the high- refractive- index film.

6. The method for producing the transfer film according to claim 5, wherein the hydrophilic treatment is corona treatment or plasma treatment.

7. The method for producing the transfer film according to claim 5 or 6, wherein the high-refractive-index film composition contains a diluting solvent having a dielectric constant at 25°C no more than 10, and wherein forming the high-refractive-index film is a step of drying the diluting solvent in the high-refractive-index film composition coated on the surface of the low-refractive-index film.

8. A laminate having a high-refractive-index film with a refractive index (Ny) and a low-refractive-index film with a refractive index (Nx) laminated in this order on at least one side of a substrate, wherein the refractive index is measured with a 594 nm wavelength laser, and satisfies the following formula (1), and wherein the high-refractive-index film is formed from a high-refractive-index film composition containing aminosilane,

$$Nx < Ny \quad (1).$$

9. The laminate according to claim 8, wherein the low-refractive-index film contains: a polymer having units of monomer (A) containing a perfluoropolyether group and nitrogen atoms; and inorganic particles.

10. The laminate according to claim 9, wherein the monomer (A) is a monomer (A-1) represented by the below structural formula (1),

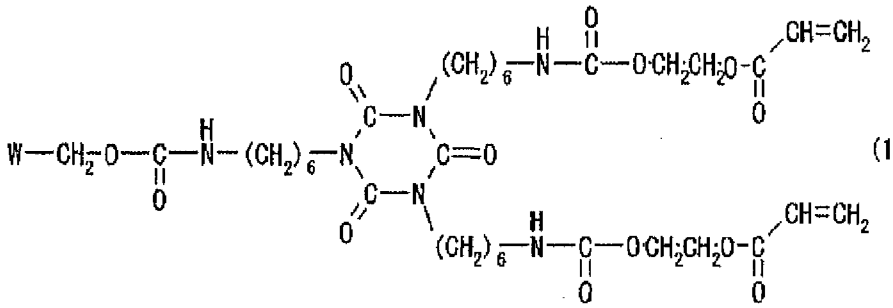

(1)

wherein W represents a perfluoropolyether group.

**11.** The laminate according to any one of claims 8 to 10, wherein the substrate is formed from a methacrylic resin.

**12.** The laminate according to any one of claims 8 to 10, wherein the substrate is formed from a polycarbonate resin.

**13.** A method for producing a laminate in which a high-refractive-index film having a refractive index (Ny) and a low-refractive-index film having a refractive index (Nx) are laminated in this order on at least one side of a substrate, wherein the refractive index is measured with a 594 nm wavelength laser, and satisfies the following formula (1),

$$Nx < Ny \quad (1),$$

the method comprising: a step of forming a transfer film laminated article by pasting the substrate onto a face of the high-refractive-index film of the transfer film according to any one of claims 1 to 4 via a bonding layer coating film; a step of forming a transfer film laminate with the bonding layer coating film as a bonding layer; and a step of peeling off a peeling film from the transfer film laminate to obtain a laminate.

**14.** The method for producing the laminate according to claim 13, wherein the bonding layer coating film contains an active energy ray curable composition, and in the step of forming the transfer film laminate, active energy rays are irradiated onto the bonding layer coating film to cure the active energy ray curable composition to obtain the bonding layer, and form the transfer film laminate.

**INTERNATIONAL SEARCH REPORT**

International application No.
PCT/JP2011/079797

A. CLASSIFICATION OF SUBJECT MATTER
*G02B1/11*(2006.01)i, *B32B7/02*(2006.01)i, *B32B27/30*(2006.01)i, *C08F290/06*(2006.01)i

According to International Patent Classification (IPC) or to both national classification and IPC

B. FIELDS SEARCHED

Minimum documentation searched (classification system followed by classification symbols)
G02B1/11, B32B7/02, B32B27/30, C08F290/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 11-288225 A (Oike & Co., Ltd.), 19 October 1999 (19.10.1999), claims; paragraphs [0006] to [0009], [0012], [0015] to [0020] (Family: none) | 1-14 |
| Y | JP 2006-306909 A (Konica Minolta Holdings, Inc.), 09 November 2006 (09.11.2006), paragraphs [0155] to [0161] (Family: none) | 1-14 |
| Y | JP 2007-078853 A (Fujifilm Corp.), 29 March 2007 (29.03.2007), paragraphs [0031], [0089] to [0096] (Family: none) | 1-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 February, 2012 (17.02.12) | 28 February, 2012 (28.02.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2011/079797

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2006-037024 A (Daikin Industries, Ltd.), 09 February 2006 (09.02.2006), claims; paragraphs [0017] to [0056], [0140] to [0141], [0161], [0168] (Family: none) | 3-4,9-10 |
| Y | JP 2003-307601 A (Nitto Denko Corp.), 31 October 2003 (31.10.2003), paragraph [0094] (Family: none) | 5-7 |
| A | JP 2009-175673 A (Hitachi Chemical Co., Ltd.), 06 August 2009 (06.08.2009), paragraphs [0078] to [0081] (Family: none) | 1-14 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000094584 A
- JP 2005096322 A
- JP 2002286907 A
- JP 2004017410 A